# EUROPEAN PATENT SPECIFICATION

(11) **EP 4 271 606 B1**
(45) Date of publication and mention of the grant of the patent: **26.03.2025**
(21) Application number: 21840991.0
(22) Date of filing: 30.12.2021
(51) Int. Cl.: B62D 6/00, B62D 15/02, G06N 3/04, H02P 9/00

(54) **STEER BY WIRE SYSTEM FOR AN AUTOMOTIVE VEHICLE**
STEER-BY-WIRE-LENKSYSTEM FÜR EIN KRAFTFAHRZEUG
SYSTÈME DE DIRECTION PAR CÂBLE POUR UN VÉHICULE AUTOMOBILE

(30) Priority: 31.12.2020 GB 202020836
(43) Date of publication of application: 08.11.2023
(73) Proprietor: ZF Automotive UK Limited, Solihull, West Midlands B90 8BG (GB)
(72) Inventor: SUN, Xiao-Dong, hull West Midlands B91 3YL (GB)
(74) Representative: Barker Brettell LLP
(86) International application number: PCT/GB2021/053448
(87) International publication number: WO 2022/144552

(56) References cited:
- CN-A- 104 836 498
- CN-A- 107 972 667
- CN-A- 109 969 181
- DE-A1- 102017 220 973

## Description

This invention relates to improvements in steer by wire system for automotive vehicles, and in particular to a system that includes a PID controller.

A modern vehicle includes a wide range of motion control systems, with one very common system being the electric power steering system(EPS). An electric power steering system assists the driver in turning the steered wheels of the vehicle using an actuator in the form of a motor to apply an assistance torque.

Most EPS systems in use today have a direct mechanical link from the hand wheel that the driver grips and the steered wheels. This provides a failsafe in the event of a fault in the EPS system such as a motor failure. An alternative breed of EPS system has no such direct physical connection, or at least not during normal operation, with movement of the hand wheel by the driver being detected by a sensor and the motor being driven in response to the output of the sensor to generate a force that steers the road wheels. To provide the driver with some feel for what is happening at the steered wheels, a secondary motor may be provided which applies a torque to the hand wheel to mimic the feel of a conventional steering system.

One suitable kind of controller that is commonly used with a SBW system is the PID controller. In use a set point value representing some demanded behaviour of the actuator, such as the current of the steering system motor, is combined with a measure of that behaviour to provide an error signal indicative of the difference between what is demanded and what is actually happening. This error signal is fed into the PID controller which in turn outputs a control signal for the actuator to track the setpoint value, the PID controller constantly adjusting the control signal so that the error signal is minimised and the tracking is achieved. This forms a closed loop control of the motion control system and can provide a highly accurate control for the actuator involved. DE 10 2017 220973 A1 discloses for example a steer by wire system for a vehicle which comprises a hand wheel, a steering gear that is attached to at least one steered road wheel, and at least one actuator that is connected to the hand wheel or the steering gear for the vehicle to apply a torque to the hand wheel or steering gear.

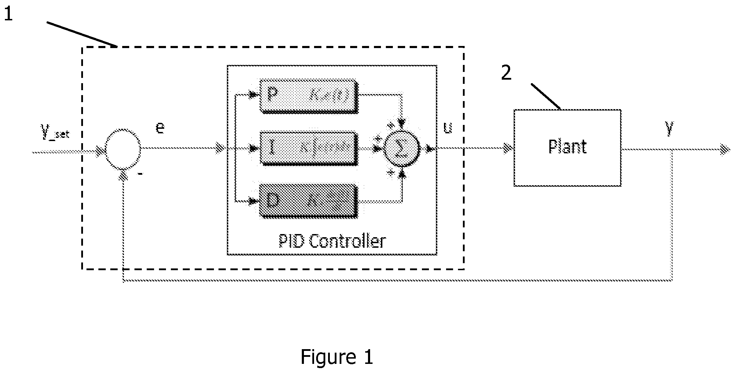

A PID controller is so called because it can use the three control terms, each typically expressed as a gain value Kp, Ki, Kd, which has a proportional, integral and derivative control effect on the signal output feedback from the control system. The principles are well known from the literature and can be expressed as:
Referring to Figure 1, a PID controller 1 for an actuator 2 or other controlled plant calculates an error value e(t) as the difference between a desired setpoint and the behaviour of the controlled plant and applies a correction based on the proportional, integral, and derivative control terms P I and D from the error. The controller attempts to minimize the error over time by adjustment of the control signal u(t). In the case of a plant comprising a three phased direct current motor, this control actuation signal may define the voltages that are to be applied to the motor for and may be fed to an inverter which in turn generates pulse width modulation signals that are applied to switches of an inverter.

Within an SBW system a PID controller may be used to control the angle of the road wheels and a further PID controller may be used to control feedback torque applied to the hand wheel by a motor. In each case a target angle or torque is combined with a measure of the actual angle of the road wheels or feedback torque to form an error term and this it fed into the respective PID controller.

The performance of the two PID controllers will depend significantly on the selection of the three gain terms, P I and D and the process of selecting the gain terms is known in the art as tuning of the controller. The gain terms will generally be set to fixed values during a design phase of the system, and may be modified to suit a particular application in a vehicle. A problem with the fixing of the gain terms is that over time the tuning can become suboptimal as the system they are controlling changes internally in the features away from that in the design phase, and they can be suboptimal for certain changes in the operating conditions of the vehicle.

The applicant has proposed a control circuit which ameliorates the limitations of prior art automotive vehicle control circuits as described above.

According to a first aspect the invention provides a steer by wire (SBW) system for a vehicle which includes a hand wheel, a steering gear that is attached to at least one steered road wheel, and at least one actuator that is connected to the hand wheel or the steering gear for the vehicle to apply to torque to the hand wheel or steering gear, the steer by wire system including a control circuit comprising:
a first PID Controller which receives at an input a set point signal and provides as an output a control signal that is used to control the motor, the controller being arranged in a closed loop with the motor and configured to minimise an error value indicative of the difference between the demanded behaviour of the motor as indicated by the set point signal and the actual behaviour of the motor, and
a neural network which has an input layer of neurons, at least one hidden layer of neurons, and an output layer comprising at least one output neuron,
in which the neural network comprises a feedforward neural network that receives at the input layer of input neurons the demand signal, the drive signal output from the controller and the error value,
and in which the neural network is configured to determine one or more of the P gain, I gain and D gain terms used by the PID controller,
and further in which the neural network receives as a feedforward term at least one additional discrete environmental variable.

The applicant has appreciated that the use of a neural network to tune the gain terms of a PID controller which is fed with at least one additional discrete environmental variable allows for an additional degree of control of the vehicle electronic control system.

The actuator or actuators may each comprise an electric motor.

The motor may be connected to the road wheels of the vehicle such that a torque applied by the motor causes the heading angle of the steered wheel to change and hence control the direction of travel of the vehicle. In this case the set point value by the indicative of a target steering angle. For a vehicle where the front wheels are steered this motor is commonly referred to as a front axle actuator (FAA).

Where the motor is connected to the road wheels, the control loop including the PID controller may be configured as a cascade of a PID steering angle control and a PID motor current control, each minimising an error in the steering angle and motor currents respectively. Both PID controllers may include a neural network that sets the P I and D terms and may use the vehicle speed as a feedforward term.

The motor may be connected to the hand wheel of the vehicle such that the motor applies a torque to the hand wheel. In this case the set point value by the indicative of a target motor torque. This motor is commonly referred to as a hand wheel actuator (HWA). The function of this is motor is not to steer the road wheels but to provide force feedback to the driver.

Where the motor is connected to the hand wheel, the control loop including the PID controller may be configured as a cascade of a PID motor torque control and a PID motor current control, each minimising an error in the motor torque and motor currents respectively. Both PID controllers may include a neural network that sets the P I and D terms and may use the vehicle speed as a feedforward term.

There may be two motors, one for the road wheels and one for the hand wheel, each controller by a PID controller in the manner set out above.

Where each of the two motors is controlled by a PID Controller, each controller may form a respective closed loop with the associated motor and act independently.

The neural network may determine the gain values as respective nodal values within a hidden layer of the neural network.

By environmental variable we may mean a variable which is indicative of a parameter that is not used with the feedback control loop of the PID controller.

The environmental variable may comprise at least one of the following commonly found in a vehicle motion control system:
- the speed of the vehicle,
- vehicle acceleration/reaction force
- steering torque or steering angle
- force applied to the road wheel by the steering part.

The skilled person will understand that this is not intended to be an exhaustive list and other variables may be used within the scope of the invention.

The neural network may be fed with the set point signal input to the controller, and with the error signal.

The neural network controller should be realised in the discrete control form.

The signals input to the neural network may be updated periodically, and between each update the neuron values may be updated in response prior to inputting updated values to the neural network.

Each of these variables will vary as the vehicle is operated, and providing the at least one additional variable at the input point to the neural network provides a degree of further adaptation to the control of the actuator, enabling the error value better to be minimised in accordance with the environmental conditions change in use.

The weights and the neurons of the neural network may be pre-set prior to first use of the neural network to define a set of values for the gains P, I and D which minimise the error value assuming that the system operates for the nominal internal and external conditions, and the environmental value has no influence.

The pre-set weights and neurons may be stored in an area of memory.

During use of the control system the weights may be updated by a gradient-descent backpropagation scheme each time a new set of input values is supplied to the neural network, and the updated weights combine with the input values are used to update the neurons .

The weight update step may be controlled by a learning strategy unit defining the profile and step for the update.

Expressed mathematically the inputs and outputs from the neural network may comprise:
y*_set & y*: discrete setpoint (target) & the measured behaviour of the actuator,
e*: the tracking error = y*_set -y*:
   u*: discrete PID control;
   U*: discrete environment variables
   Kp, Ki and Kd: discrete P(proportional), I(integral), D(derivative) Control Gains respectively.

In a most preferred arrangement the Neural Network is configured to perform a gradient descent learning for the inter- neuron weightings.

In a most preferred arrangement the neural network may determine the weights using a back propagation algorithm.

The or each environmental variable by the fed into the neutral network at an input layer. The control gains may be calculated as the neuron point values of respective neurons of a hidden layer of the neural network, and the control signal value may be generated at an output neuron of the neural network.

Once a new set of inputs have been fed to the input neurons of the neural network, the values of the hidden neurons will be calculated by a perceptron model upon the input values combined with the interneuron weightings applied between the input layer and the hidden layer.

The neural network may be configured to make the error term e(k) a minimum using so-called the gradient descent back-propagation algorithm to perform the weights W training and update for the error function minimisation, to achieve the optimal PID control gains (Kp ,Ki and Kd), hence the desired PID control for the output signal.

The neural network may have a single hidden layer of neurons that connect the input layer neurons to the output layer.

The neural network PID controller may be arranged such that for each time step the following steps are performed:
Input values updated;
Weightings updated following the gradient descent back propagation scheme control combining with the input values, error and last control signal;
The neuron values update calculation from the perceptron model using the input neurons and the weighting gains (W) applied to connections between the input neurons and the hidden layer neurons;
Controller PID gain values updated based on the neuron values;
Control signal output from the controller generated by applying gains to the error signal input to the PID controller.

The propagation of the signals through the neural network may be performed each time a new error signal is input to the PID controller and the output of the controller may only be generated once the neural network has completed the back propagation.

The steer by wire systems may include one or more further PID controllers. In a preferred arrangement a controller may be provided that generates the set point value for the motor or for each motor, for example the demanded steering angle and demanded feedback torque set points. This additional controller may include a look up table of stored values to determine the value of the torque set point as a function of the steering angle and one or more environmental variables such as a the vehicle speed. The stored values may be modified or otherwise generated in use by a neural network.

The system may include a neural network identifier for a model of the vehicle dynamics, to provide an on-line identification of vehicle dynamic variables that may be used to generate appropriate motor drive currents based on the output control signal from the PID controller for the road wheel angle.

The system may include a steering hand wheel torque sensor, and where the steering gear comprises a steering rack connected to the motor, the system may include a rack force sensor.

There will now be described by way of example only, one embodiment of the present invention of which:
**Figure 1** is a schematic of a general PID Controller incorporated into a feedback loop where it controls the operation of a plant such as an electric motor;
**Figure 2** is a schematic view of a first embodiment of a steer by wire system for a vehicle in accordance with the invention;

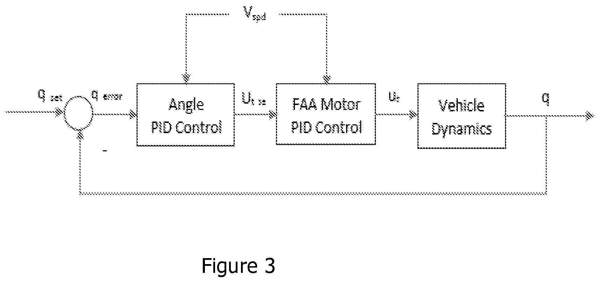

**Figure 3** is a schematic of a prior art control circuit used to control the road wheel angles of a vehicle;
**Figure 4** is a schematic of a corresponding control circuit for the SBW system of Figure 2;
**Figure 5** is a representation of the interneuron connections of the neural network of the PID angle controller of Figure 4;
**Figure 6** shows the configuration and each the layer function block of the neural network PID controller implemented in Matlab/Simulink ; and
**Figure 7** shows a second embodiment of a control circuit for an SBW system in accordance with an aspect of the invention.

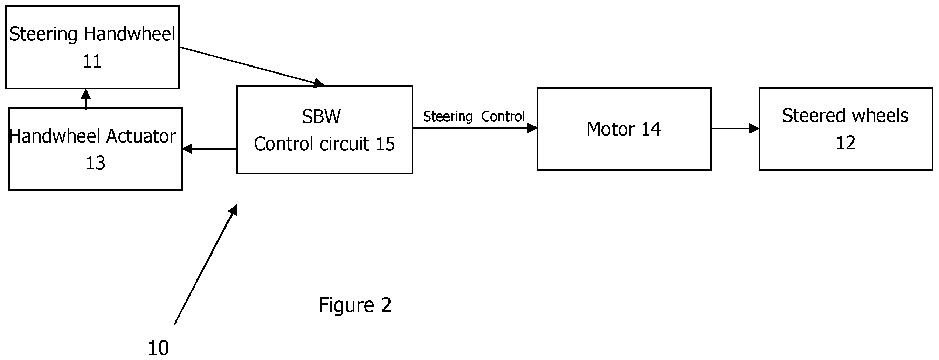

As shown in the Figure 2, a vehicle may be fitted with a steer by wire system 10 that allows the driver to set the direction of the vehicle by changing the angle of the road wheels. Typically the steered wheels 12 will be the two front wheels supported by a steering axle but the invention also extends to the steering of rear wheels of vehicles.

A steer by wire system is characterised by an absence of mechanical connection between the hand wheel 11 and the steered wheels 12. In this example, the system comprises a steering hand wheel 11, a hand wheel actuator (HA) 13 such as a motor that may apply a feedback torque to the hand wheel, a pair of steered road wheels 12, a second motor 14 that applies a force to a linkage attached to the road wheels such as a part of a steering rack, and an SBW control circuit15.

Each motor in the example comprises a multi-phase pulse width modulated synchronous motor that outputs a torque in response to a control signal output from the control circuit. The SBW control circuit 15 and the motors form a pair of closed feedback loops with a measurement of a parameter of the motor being fed back to the input side of the control circuit.

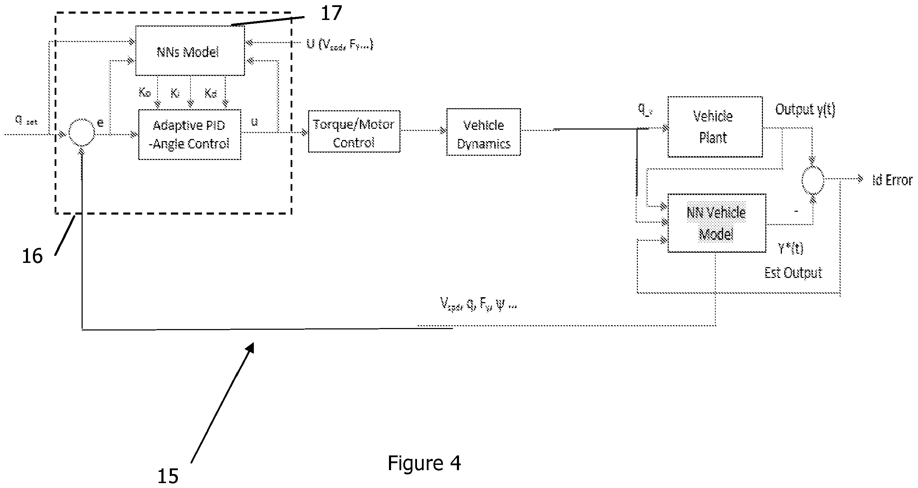

Figure 4 shows in detail the functional parts of the control circuit 15 for the control of the motor 14 that steers the front wheels 12. The circuit 15 comprises a PID controller 16 that has a set of gains P I and D that are determined by a neural network 17. The PID Controller 16 receives at an input a set point signal for the motor 14 which is indicative of a demanded road wheel angle. The controller is configured to minimise an error value e indicative of the difference between the demanded road wheel angle and an actual road wheel angle.

As is well known, the output of a PID controller- in this case an angle control signal - is determined as a sum of three terms, a proportional term, an integral term and a differential term. Each term is calculated by multiplying the error signal value by a respective gain term Kp, Ki, and Kd.

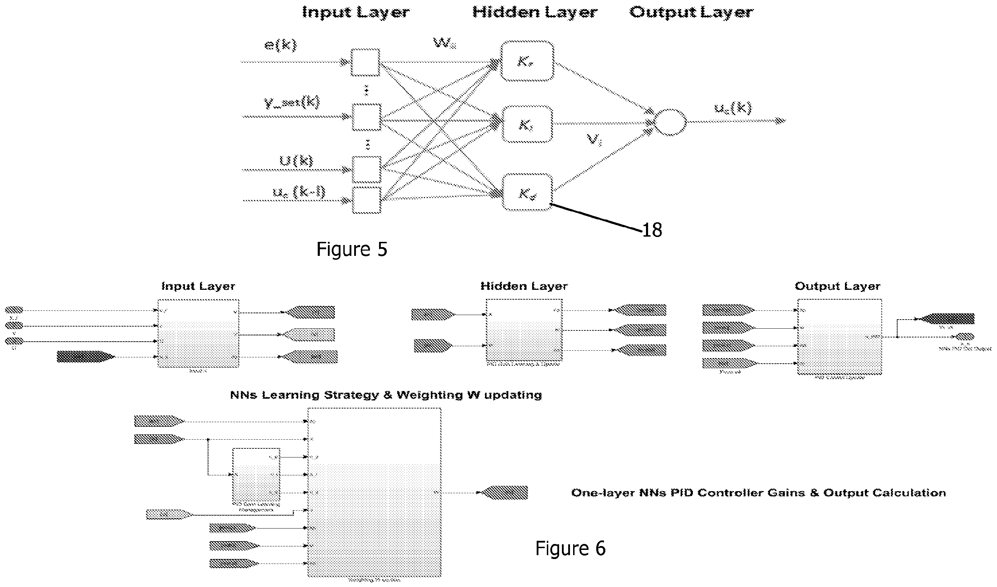

These gain terms are calculated in the example of Figure 4 by a neural network 17 as shown in Figure 5. The neural network comprises a set of neurons 18 which receive inputs, followed by the process to combine the inputs with their internal state and weights, and perform the neuron values calculation using an activation function, and produce output using an output function. The initial inputs are external data which in this example comprise environmental variables that are relevant to the torque control for the lane keep assistance system.

The neurons 18 are arranged in a network of connections, each connection providing the output of one neuron as an input to another neuron. Each connection is assigned a weight that represents its relative importance. The propagation function computes the input to a neuron (activation function) from the outputs of its predecessor neurons and their connections as a weighted sum.

The specific neural network 17 used in the SBW control circuit of Figure 4 is a feedforward network with one hidden layer. The network has an input layer of neurons, an output layer comprising at least one output neuron, and at least on hidden layer of neurons. This is shown in Figure 5. The neural network is configured to perform gradient-descent backpropagation learning to provide the P gain, I gain and D gain terms used by the PID controller. The neural network in this example is a single hidden layer neural network in which the hidden layer has three neurons, each neuron defining a value of a respective gain term for the PID controller. The neural network has a single output neuron defining the value of the drive signal for the motor.

As shown in Figures 5 and 6 the neural network receives at the input neurons the error value e, demand signal y_set, the control signal u_{c} output from the PID controller.

The Neural network also receives as a feedforward term a number of additional discrete environmental variables. In this example one of the feedforward environmental variables can be the vehicle speed and another the force applied to the steering linkage. The neural network is also fed with the target angle qset, the control signal output from the PID and the error term.

The operation of the neural network and the discrete PID controller during use of the electronic system is as follows:
Step 1 - the input values fed to the input layer neurons of the neural network are updated as is the set point signal fed to the PID controller;
Step 2: Obtain the kth step learning coefficient η(K) from the simple (adaptive) formula
Step 3- The Weightings between neurons in the neural network are updated following a back-propagation scheme combining with the input values, previous control signal and learning coefficient update
Step 4- The Controller gain values are updated based on the hidden layer neuron values calculation by the perceptron model from the input neurons and the weighting gains W applied to connections between the input neurons and the hidden layer neurons,
Step 5- the updated control signal u_{c} is output from the PID controller generated by applying gains to the error signal input to the PID controller;
Step 6- the system output, here the motor current, and the associated environment variable(s), are measured and the values are fed back to the input of the PID controller
Step 7- repeat steps 1 to 6.

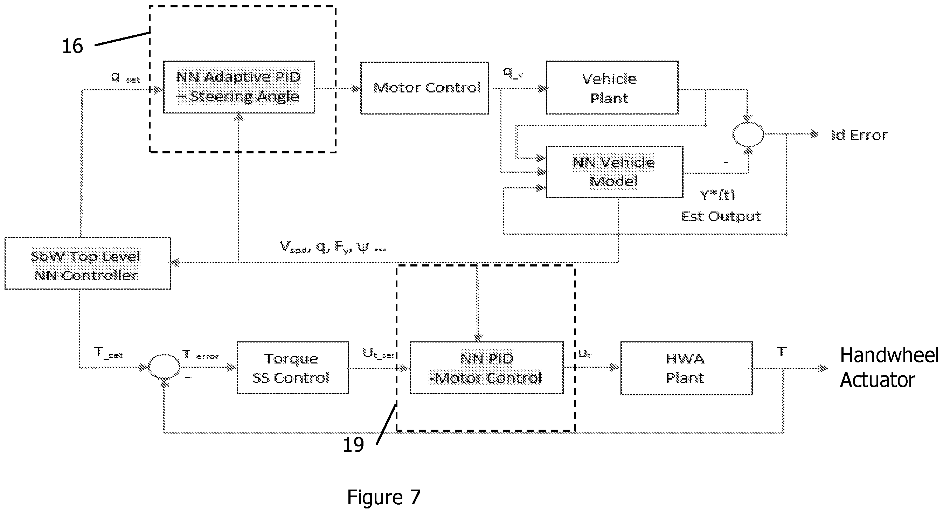

In an alternative embodiment of a control circuit 30 of an SBW system shown schematically in Figure 7, the motor 14 that sets the road wheel angles is controlled in the same way as the first embodiment using a PID controller but a second part to the control circuit is provided which controls the torque output by the hand wheel actuator. This second circuit comprises a second PID controller 19 that has a set of gains P I and D that are determined by a respective second neural network 20. The second PID Controller receives at an input a set point signal for the hand wheel actuator which is indicative of a demanded torque. The controller is configured to minimise an error value indicative of the difference between the demanded torque and an actual torque

The output of the second PID controller 19- in this case torque control signal - is determined as a sum of three terms, a proportional term, an integral term and a differential term. Each term is calculated by multiplying the error signal value by a respective gain term Kp, Ki, and Kd.

These gain terms are calculated in the example of Figure 7 by a second neural network arranged as shown in Figure 5.

The embodiment of Figure 7 also includes a top level controller 20 which outputs the set point values for the angle and torque based on a neural network identifier which takes as state variables values of environmental parameters such as the vehicle speed, the road wheel angle, the force applied to the steering part, the motor angular velocity and so on. This enables some real time adaptation of the set point values making the system increasingly robust.

## Claims

1. A steer by wire system for a vehicle comprising a hand wheel, a steering gear that is attached to at least one steered road wheel, and at least one actuator that is connected to the hand wheel or the steering gear for the vehicle to apply a torque to the hand wheel or steering gear, the steer by wire system including a control circuit comprising:
a first PID Controller which receives at an input a set point signal and provides as an output a control signal that is used to control the motor, the controller being arranged in a closed loop with the motor and configured to minimise an error value indicative of the difference between the demanded behaviour of the motor as indicated by the set point signal and the actual behaviour of the motor, and
a neural network which has an input layer of neurons, at least one hidden layer of neurons, and an output layer comprising at least one output neuron,
in which the neural network comprises a feedforward neural network that receives at the input layer of input neurons the demand signal, the drive signal output from the controller and the error value,
and in which the neural network is configured to determine one or more of the P gain, I gain and D gain terms used by the PID controller,
and further in which the neural network receives as a feedforward term at least one additional discrete environmental variable.

2. A system according to claim 1 in which the actuator comprises a motor that is connected to the road wheels of the vehicle such that a torque applied by the motor causes the heading angle of the steered wheel to change and hence control the direction of travel of the vehicle and the set point value is indicative of a target steering angle.

3. A system according to claim 1 or claim 2 in which the actuator is a motor that is connected to the hand wheel of the vehicle such that the motor applies a torque to the hand wheel and the set point value by the indicative of a target motor torque.

4. A system according to claim 2 and claim 3 in which each of the two motors is provided with a respective one of the PID controllers.

5. A system according to any preceding claim in which the or each of the neural networks determines the gain values as respective nodal values within a hidden layer of the neural network.

6. A system according to any preceding claim in which the environmental variable comprises at least one of the following commonly found in a vehicle motion control system:
- the speed of the vehicle,
- the motor rotation speed;
- force applied to the road wheel by the steering part.

7. A system according to any preceding claim in which the or each neural network is fed with the set point signal input to the controller, and with the error signal.

8. A system according to any preceding claim in which the or each of the signals input to the neural network are updated periodically, and between each update the neuron values may be updated in response prior to inputting updated values to the neural network.

## Patentansprüche

1. Steer-by-Wire-Lenksystem für ein Fahrzeug, das ein Handrad, einen Lenkmechanismus, der an mindestens einem gelenkten Laufrad angebracht ist, und mindestens ein Stellglied, das mit dem Handrad oder dem Lenkmechanismus verbunden ist, umfasst, damit das Fahrzeug auf das Handrad oder den Lenkmechanismus ein Drehmoment ausübt, bei dem das Steer-by-Wire-Lenksystem eine Steuerschaltung umfasst, umfassend:
einen ersten PID-Regler, der an einem Eingang ein Sollwertsignal empfängt und am als Ausgabe ein Steuersignal bereitstellt, das verwendet wird, um den Motor zu steuern, bei dem der Regler in einem geschlossenen Regelkreis mit dem Motor angeordnet ist und dazu konfiguriert ist, einen Fehlerwert zu minimieren, der den Unterschied zwischen dem angefragten Verhalten des Motors, wie es durch das Sollwertsignal angegeben wird, und dem tatsächlichen Verhalten des Motors angibt, und
ein neuronales Netzwerk, das eine Eingangsschicht von Neuronen, mindestens eine ausgeblendete Schicht von Neuronen und eine Ausgangsschicht, die mindestens ein Ausgangsneuron umfasst, aufweist,
bei dem das neuronale Netzwerk ein neuronales Feedforward-Netzwerk umfasst, das an der Eingangsschicht von Eingangsneuronen das Anfragesignal, das Treibersignal, das von dem Regler ausgegeben wird, und den Fehlerwert empfängt,
und bei dem das neuronale Netzwerk dazu konfiguriert ist, einen oder mehrere Terme der P-Verstärkung, der I-Verstärkung und der D-Verstärkung, die von dem PID-Regler verwendet werden, zu bestimmen,
und ferner bei dem das neuronale Netzwerk als Feedforward-Term mindestens eine zusätzliche diskrete Umgebungsvariable empfängt.

2. System nach Anspruch 1, bei dem das Stellglied einen Motor umfasst, der mit den Laufrädern des Fahrzeugs verbunden ist, so dass ein Drehmoment, das von dem Motor ausgeübt wird, bewirkt, dass sich der Kurswinkel des gelenkten Rads und somit die Steuerung der Bewegungsrichtung des Fahrzeugs ändert, und der Sollwert einen Ziellenkwinkel angibt.

3. System nach Anspruch 1 oder Anspruch 2, bei dem das Stellglied ein Motor ist, der mit dem Handrad des Fahrzeugs verbunden ist, so dass der Motor ein Drehmoment auf das Handrad und den Sollwert durch die Angabe eines Zielmotordrehmoments anwendet.

4. System nach Anspruch 2 und Anspruch 3, bei dem jeder der beiden Motoren mit einem jeweiligen Regler der PID-Regler versehen ist.

5. System nach einem der vorhergehenden Ansprüche, bei dem das oder jedes der neuronalen Netze die Verstärkungswerte als jeweilige Knotenwerte innerhalb einer ausgeblendeten Schicht des neuronalen Netzwerks bestimmt.

6. System nach einem der vorhergehenden Ansprüche, bei dem die Umgebungsvariable mindestens eine der folgenden Variablen umfasst, die gewöhnlich in einem System zum Steuern der Bewegung eines Fahrzeugs zu finden sind:
- Fahrzeuggeschwindigkeit,
- Drehzahl des Motors,
- Kraft, die auf das Laufrad durch den Lenkteil ausgeübt wird.

7. System nach einem der vorhergehenden Ansprüche, bei dem das oder jedes neuronale Netzwerk mit dem Sollwertsignal, das in den Regler eingegeben wird, und mit dem Fehlersignal versorgt wird.

8. System nach einem der vorhergehenden Ansprüche, bei dem das oder jedes der Signale, die in das neuronale Netzwerk eingegeben werden, periodisch aktualisiert wird, und zwischen jeder Aktualisierung die Neuronenwerte als Reaktion vor dem Eingeben der aktualisierten Werte in das neuronale Netzwerk aktualisiert werden können.

## Revendications

1. Système de direction à commande par câble pour un véhicule comprenant un volant de manœuvre, un mécanisme de direction qui est rattaché à au moins une roue directrice, et au moins un actionneur qui est connecté au volant de manœuvre ou au mécanisme de direction pour que le véhicule applique un couple au volant de manœuvre ou au mécanisme de direction, le système de direction à commande par câble comprenant un circuit de commande, comprenant :
un premier régulateur PID qui reçoit au niveau d'une entrée un signal de consigne et fournit en sortie un signal de commande qui est utilisé pour commander le moteur, le régulateur étant agencé dans une boucle fermée avec le moteur et configuré pour minimiser une valeur d'erreur indiquant la différence entre le comportement demandé du moteur tel qu'indiqué par le signal de consigne et le comportement réel du moteur, et
un réseau neural qui présente une couche d'entrée de neurones, au moins une couche cachée de neurones, et une couche de sortie comprenant au moins un neurone de sortie,
dans lequel le réseau neuronal comprend un réseau neural prédictif qui reçoit au niveau de la couche d'entrée de neurones d'entrée le signal de demande, le signal de commande sorti du régulateur et la valeur d'erreur,
et dans lequel le réseau neuronal est configuré pour déterminer un ou plusieurs termes de gain P, de gain I et de gain D utilisés par le régulateur PID,
et en outre dans lequel le réseau neuronal reçoit comme terme prédictif au moins une variable d'environnement discrète supplémentaire.

2. Système selon la revendication 1, dans lequel l'actionneur comprend un moteur qui est connecté aux roues du véhicule de sorte qu'un couple appliqué par le moteur fait que l'angle de cap de la roue directrice change, et donc la commande de la direction de déplacement du véhicule, et la valeur de consigne indique un angle de braquage cible.

3. Système selon la revendication 1 ou la revendication 2, dans lequel l'actionneur est un moteur qui est connecté au volant de manœuvre du véhicule de sorte que le moteur applique un couple au volant de manœuvre et à la valeur de consigne par l'indication d'un couple moteur cible.

4. Système selon la revendication 2 et la revendication 3, dans lequel chacun des deux moteurs est prévu avec un régulateur respectif des régulateurs PID.

5. Système selon l'une quelconque des revendications précédentes, dans lequel le ou chacun des réseaux neuronaux détermine les valeurs de gain comme des valeurs nodales respectives à l'intérieur d'une couche cachée du réseau neuronal.

6. Système selon l'une quelconque des revendications précédentes, dans lequel la variable d'environnement comprend au moins l'une des variables suivantes communément trouvées dans un système de commande de mouvement de véhicule :
- la vitesse du véhicule,
- la vitesse de rotation du moteur ;
- la force exercée sur la roue par la partie de direction.

7. Système selon l'une quelconque des revendications précédentes, dans lequel le ou chaque réseau neuronal est alimenté par le signal de consigne entré dans le régulateur, et par le signal d'erreur.

8. Système selon l'une quelconque des revendications précédentes, dans lequel le ou chacun des signaux entrés dans le réseau neuronal est mis à jour périodiquement, et entre chaque mise à jour, les valeurs neuronales peuvent être mises à jour en réponse avant d'entrer des valeurs mises à jour dans le réseau neuronal.
